# EUROPÄISCHE PATENTSCHRIFT

(11) **EP 1 101 022 B1**
(45) Veröffentlichungstag und Bekanntmachung des Hinweises auf die Patenterteilung: **06.03.2002**
(21) Anmeldenummer: 99938333.4
(22) Anmeldetag: 24.07.1999
(51) Int. Cl.: F02B 37/18

(54) **VERFAHREN ZUR FUNKTIONSPRÜFUNG EINES BYPASSELEMENTES FÜR EINE BRENNKRAFTMASCHINE**
METHOD FOR THE FUNCTIONAL TESTING OF A BYPASS ELEMENT FOR AN INTERNAL COMBUSTION ENGINE
PROCEDE POUR L'ESSAI DE FONCTIONNEMENT D'UN ELEMENT DE DERIVATION DANS UN MOTEUR A COMBUSTION INTERNE

(30) Priorität: 01.08.1998 DE 19834762
(43) Veröffentlichungstag der Anmeldung: 23.05.2001
(73) Patentinhaber: AUDI AG, 85045 Ingolstadt (DE)
(72) Erfinder: STEFAN, Joachim, D-85122 Hofstetten (DE); IHRLER, Werner, D-85101 Lenting (DE); SCHREINER, Maximilian, D-66740 Saarlouis (DE)
(86) Internationale Anmeldenummer: EP9905307
(87) Internationale Veröffentlichungsnummer: WO0008322

(56) Entgegenhaltungen:
- EP-A- 0 786 588
- DE-C- 19 513 156
- US-A- 5 447 031
- PATENT ABSTRACTS OF JAPAN vol. 016, no. 474 (M-1319), 2. Oktober 1992 (1992-10-02) & JP 04 171226 A (TOYOTA MOTOR CORP), 18. Juni 1992 (1992-06-18)
- PATENT ABSTRACTS OF JAPAN vol. 007, no. 257 (M-256), 16. November 1983 (1983-11-16) & JP 58 140423 A (MITSUBISHI DENKI KK), 20. August 1983 (1983-08-20)

## Beschreibung

Die Erfindung betrifft ein Verfahren zur Funktionsprüfung eines Bypasselements für eine Brennkraftmaschine nach Anspruch 1.

Zur Steigerung der Motorleistung von Brennkraftmaschinen werden häufig Abgasturbolader eingesetzt. Hierbei wird auf der Auslaßseite der Brennkraftmaschine der Abgasstrom über eine Abgasturbine geleitet, die einen Verdichter auf der Einlaßseite der Brennkraftmaschine antreibt.
Der Abgasstrom kühlt dabei beim Durchgang über die Abgasturbine u.a. aufgrund der Arbeitsleistung und des erhöhten Wärmeübergangs ab. Im normalen Betrieb der Brennkraftmaschine ist dies erwünscht, nicht jedoch während des Startvorganges der Brennkraftmaschine. Hier ist vorrangiges Ziel die schnelle Aufheizung eines dem Abgasturbolader nachgeschalteten Abgaskatalysators, damit dieser seine Mindesttemperatur, ab der die Abgaskonvertierung einsetzt, so rasch wie möglich erreicht.
Aus diesem Grund wird in der Startphase sowohl bei Brennkraftmaschinen mit als auch ohne Abgasturbolader dem Abgasstrom Sekundärluft zugeführt, um durch eine Nachoxidation den Abgasstrom zusätzlich aufzuheizen. Dadurch wird der Aufheizvorgang des Abgaskatalysators beschleunigt.

Abgasturbolader weisen in der Regel eine Bypassleitung auf, die über ein Ventil oder mit eine Klappe gesteuert wird. Derartige Bypasselemente ermöglichen den Abgasstrom zumindest teilweise an der Abgasturbine vorbeizuleiten, um dadurch den Ladedruck bzw. den Abgasgegendruck zu begrenzen. Es ist weiterhin bekannt während der Startphase der Brennkraftmaschine die Bypassleitung freizugeben, um wie oben erwähnt, ein Abkühlen des Abgasstromes zu vermeiden und dadurch ein schnelleres Aufheizen des Abgaskatalysators zu gewährleisten.

Aufgrund von gesetzlichen Vorschriften (OBDII) ist es bereits notwendig, abgasrelevante Bauteile in Kraftfahrzeugen auf ihre Funktionsfähigkeit hin zu überprüfen und auftretende Fehlfunktionen unmittelbar in einer Speichereinheit im Fahrzeug abzuspeichern. Diese Speichereinheit wird bei einer nachfolgenden Inspektion ausgelesen. Dadurch werden Fehlfunktionen erkannt und gegebenenfalls behoben.

Da das Bypasselement u.a. Einfluß auf das Aufwärmverhalten des Abgaskatalysators hat, stellt es somit ein abgasrelevantes Bauteil dar, dessen Funktion überprüft werden muß. Denkbar ist eine direkte Überprüfung der mechanischen Bewegung des Bypasselements mit einem Weg- oder Winkelaufnehmer. Solche Vorrichtungen sind jedoch aufwendig und erhöhen den Montageaufwand. Sie sind teuer und bedeuten eine Gewichtszunahme des Kraftfahrzeuges

Aufgabe der vorliegenden Erfindung ist es, ein Verfahren zur Funktionsprüfung eines Bypasselement anzugeben, das die oben genannten Nachteile nicht aufweist, das insbesondere ohne zusätzliche Vorrichtungen auskommt, das einfach und zuverlässig durchführbar ist.

Gelöst wird diese Aufgabe durch die dem Anspruch 1 angegebenen Verfahrensschritte.

Vorteilhafte Weiterentwicklungen der Erfindung sind in den Unteransprüchen angegeben.

Die wesentliche Idee der Erfindung besteht darin, bei der Funktionsprüfung des Bypasselements den Ladedruck des Abgasturboladers zu überwachen und durch Ansteuern des Bypasselements die Bypassleitung kurzzeitig zu öffnen. Durch dieses Öffnen wird der Abgasstrom an der Abgasturbine vorbeigeleitet und damit die Leistung des Abgasturboladers verringert. Dadurch sinkt der Ladedruck auf der Einlaßseite der Brennkraftmaschine. Nach ca. 1-2 Sekunden wird die Bypassleitung wieder verschlossen. Die Änderung des Ladedrucks ist ein Maß dafür, ob das Bypasselement ordnungsgemäß funktioniert. Ändert sich der Ladedruck nicht in einem vorbestimmten Maße, so wird ein Fehlersignal abgespeichert. Mit Hilfe des erfindungsgemäßen Verfahrens ist damit eine einfachere Funktionsprüfung eines Bypasselement möglich. Aufwendige Zusatzeinrichtungen sind hierfür nicht notwendig.

Das erfindungsgemäße Verfahren ist anhand eines in der Zeichnung dargestellten Ausführungsbeispiels näher erläutert.

Es zeigen:
- Fig. 1: schematische Darstellung einer Brennkraftmaschine mit einem Bypasselement
- Fig.2: Meßsignal während einer Funktionsüberprüfung

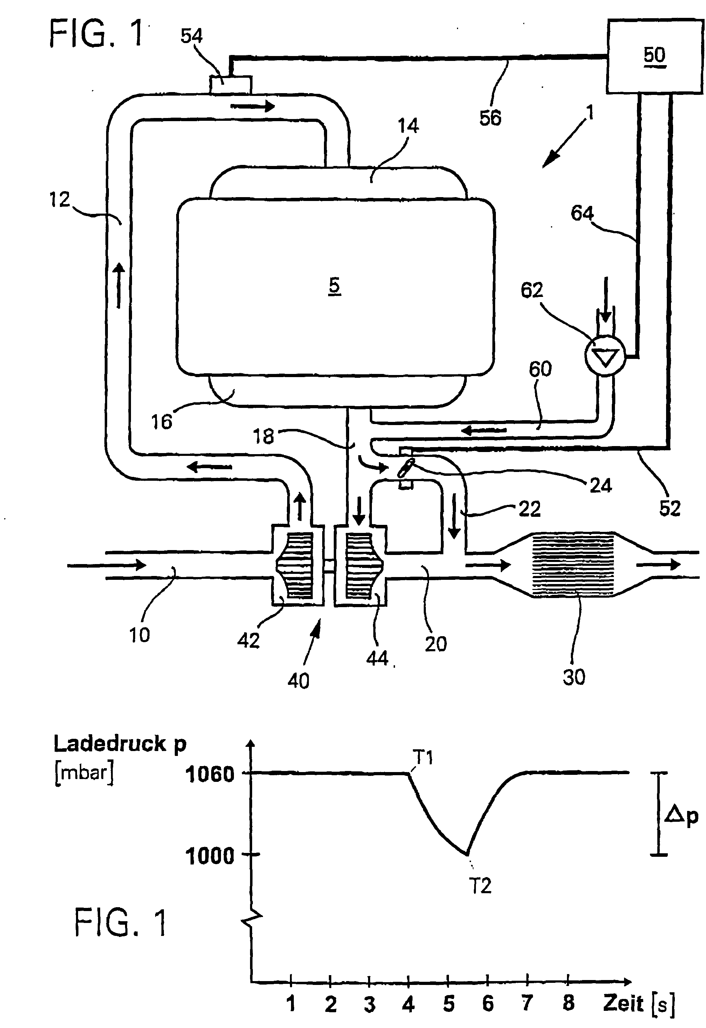

Figur 1 zeigt eine Brennkraftmaschine 1 eines Kraftfahrzeuges in schematischer Darstellung. Einlaßseitig weist der Motor 5 der Brennkraftmaschine 1 eine Ansaugleitung 10 auf, die über einen Verdichter 42 eines Abgasturboladers 40 und eine Ladeluftleitung 12 zu einem Verteiler 14 an der Brennkraftmaschine 1 führt. Auslaßseitig weist die Brennkraftmaschine 1 einen Abgaskrümmer 16 auf, der über ein Vorrohr 18 zu einer Abgasturbine 44 des Abgasturboladers führt. Die Abgasturbine 44 ist über eine Abgasleitung 20 mit einem Katalysator 30 verbunden. Der Abgaskatalysator 30 ist in bekannter Weise mit einer nicht näher dargestellten Abgasanlage verbunden. Zur direkten Verbindung zwischen dem Vorrohr 18 und der Abgasleitung 20 dient eine Bypassleitung 22. In der Bypassleitung 22 ist als ansteuerbares Bypasselement eine Bypassklappe 24 angeordnet, die über eine Steuerleitung 52 mit einer Steuereinheit 50 verbunden ist. Die Bypassklappe 24 umfaßt eine nicht näher dargestellte Betätigungseinrichtung. Denkbar ist auch die Bypassleitung 22 mit Hilfe eines Bypassventils zu verschließen.
Zwischen Verdichter 42 und Verteiler 14 ist an der Ladeluftleitung 12 ein Ladedrucksensor 54 vorgesehen, der über eine Verbindungsleitung 56 mit der Steuereinheit 50 verbunden ist. Weiterhin ist eine Sekundärluftleitung 60 vorgesehen, die zwischen dem Abgaskrümmer 16 und der Bypassleitung 22 in das Vorrohr 18 mündet. Die Sekundärluftleitung 60 weist ein Sekundärluftventil 62 auf, das über eine Steuerleitung 64 mit der Steuereinheit 50 verbunden ist. Die Einleitung von Sekundärluft kann auch an einer anderen Stelle stromaufwärts der Eintrittsöffnung der Bypassleitung 22 erfolgen.
Mit Hilfe des Verdichters 42 wird die Ladeluft für die Brennkraftmaschine 1 komprimiert. Angetrieben wird der Verdichter 42 über den über die Abgasturbine 44 geleiteten Abgasstrom. Die Strömungsrichtung der Ladeluft bzw. des Abgasstromes ist jeweils mit Pfeilen gekennzeichnet. Durch Öffnen bzw. Schließen der Bypassklappe 24 läßt sich der Abgasstrom, der über die Abgasturbine 44 des Abgasturboladers 40 geleitet wird, steuern.
Mit Hilfe des Ladedrucksensors 44 wird der Ladedruck p gemessen und in der Steuereinheit 50 ausgewertet.

In Figur 2 ist das Meßsignal des Ladedrucksensors 54 während einer Funktionsprüfung schematisch dargestellt. Zum Zeitpunkt T1 wird die Bypassklappe 24 geöffnet, zum Zeitpunkt T2 wieder geschlossen. Die Druckänderung ist mit δp bezeichnet. Die gesamte Ansteuerung des Bypasselements (Öffnen/ Schließen) dauert ca. 3 Sekunden.

Nachfolgend ist das erfindungsgemäße Verfahren näher erläutert.
Ist eine Funktionsüberprüfung des Bypasselements notwendig, so wird in einem ersten Verfahrensschritt der Ladedruck p des Abgasturboladers 40 mittels der Steuereinheit 50 überwacht. In einem zweiten Verfahrensschritt wird das Bypasselement 24 kurzzeitig geöffnet. In einem dritten Verfahrensschritt wird die Änderung des Ladedrucks δp in der Steuereinheit 50 ausgewertet. Übersteigt die Änderung des Ladedrucks δp einen vorgegebenen Grenzwert G nicht, so wird in der Steuereinheit 50 ein entsprechendes Fehlersignal abgespeichert. Dieses Fehlersignal kann bei einer Inspektion ausgelesen werden, und gibt einen Hinweis darauf, daß das Bypasselement 24 nicht einwandfrei funktioniert. Damit ist eine vorschriftsmäßige Überwachung des Bypasselements 24 gegeben.

In vorteilhafter Weise wird eine Funktionsprüfung des Bypasselements 24 nur dann durchgeführt, wenn die Brennkraftmaschine 1 im stationären Zustand betrieben wird, d.h. konstante Drehzahl bzw. keine Drehmomentänderung. In diesem Betriebszustand der Brennkraftmaschine 1 läßt sich das Meßsignal des Ladedrucksensors 54 besonders einfach auswerten.

Erfolgt während der Funktionsprüfung des Bypasselements eine Drehmomentanforderung durch den Fahrer, so hat diese Vorrang vor der Funktionsprüfung. Die Funktionsprüfung wird abgebrochen und zu einem späteren Zeitpunkt wiederholt. Entsprechendes gilt bei einer Drehzahländerung.

Der Fahrer wird somit eine Funktionsüberprüfung bzw. eine abgebrochene Funktionsprüfung nicht wahrnehmen.

Die Steuereinheit 50 bietet die Möglichkeit, die bei der jeweiligen Drehzahl zu erwartende Druckänderung aufgrund einer Funktionsprüfung bzw. den theoretischen Signalverlauf abzuspeichern.
Über Abweichungen zwischen gemessenen Signalverlauf und Sollsignalverlauf lassen sich Rückschlüsse auf den Betriebszustand der Brennkraftmaschine ziehen. Außerdem können altersbedingte Änderungen des Signalverlaufes adaptiv angepaßt werden.

Mit Hilfe des erfindungsgemäßen Verfahrens läßt sich in einfacher Weise eine Funktionsprüfung eines Bypasselements 24 durchführen. Zusätzliche Einrichtungen sind nicht notwendig.

## Patentansprüche

1. Verfahren zur Funktionsprüfung eines Bypasselements, das den Abgasstrom einer Brennkraftmaschine über die Abgasturbine eines Abgasturboladers regelt und das über eine Steuereinheit (50) ansteuerbar ist, mit folgenden Verfahrensschritten:
a) Überwachung des Ladedrucks p des Abgasturboladers (40)
b) Kurzzeitiges Öffnen des Bypasselements (24)
c) Bestimmung der Ladedruckänderung δp des Abgasturboladers (40)
d) Abspeichern eines Fehlersignals, falls die Ladedruckänderung δp einen vorgegebenen Grenzwert G nicht übersteigt

2. Verfahren nach Anspruch 1, wobei die Funktionsprüfung bei einem stationären Betriebspunkt der Brennkraftmaschine durchgeführt wird.

3. Verfahren nach Anspruch 1 oder Anspruch 2, wobei die Funktionsprüfung abgebrochen wird, sobald eine Drehmomentänderung oder Drehzahländerung erfolgt.

4. Verfahren nach den Ansprüchen 1-3, wobei das Bypasselement (24) eine Bypassklappe ist.

5. Verfahren nach den Ansprüchen 1-3, wobei das Bypasselement (24) eine Bypassventil ist .

## Claims

1. Method for the functional testing of a bypass element which regulates the exhaust gas stream of an internal combustion engine over the exhaust turbine of an exhaust turbocharger and is triggerable via a control unit (50), with the following process steps:
a) monitoring of boost pressure p of the exhaust turbocharger (40)
b) brief opening of bypass element (24)
c) determining of boost pressure change δp of exhaust turbocharger (40)
d) storing of an error signal if boost pressure change δp exceeds a predefined limit value G.

2. Method according to Claim 1, in which the functional testing is carried out at a steady operating state of the internal combustion engine.

3. Method according to Claim 1 or Claim 2, in which the functional testing is terminated as soon as a change in torque or engine speed occurs.

4. Method according to Claims 1-3, in which the bypass element (24) is a butterfly valve.

5. Method according to Claims 1-3, in which the bypass element (24) is a bypass valve.

## Revendications

1. Procédé pour l'essai de fonctionnement d'un élément de dérivation qui régule le flux de gaz d'échappement d'un moteur à combustion interne passant par la turbine à gaz d'échappement d'un turbocompresseur entraîné par le gaz d'échappement et est susceptible d'être commandé par l'intermédiaire d'une unité de commande (50), présentant les étapes de procédé ci-après :
a) Surveillance de la pression de suralimentation p des turbocompresseurs entraînés par les gaz d'échappement (40)
b) Ouverture brève de l'élément de dérivation (24)
c) Détermination de la variation de pression de suralimentation δp du turbocompresseur entraîné par les gaz d'échappement (40)
d) Mémorisation d'un signal d'erreur dans le cas où la variation de pression de suralimentation δp ne dépasse pas une valeur limite G prédéterminée.

2. Procédé selon la revendication 1, selon lequel l'essai de fonctionnement étant conduit pour un point de fonctionnement stationnaire du moteur à combustion interne.

3. Procédé selon la revendication 1 ou la revendication 2, selon lequel l'essai de fonctionnement est interrompu dès qu'une variation du couple ou une variation de la vitesse de rotation se produit.

4. Procédé selon les revendications 1 à 3, selon lequel l'élément de dérivation (24) est un clapet de dérivation.

5. Procédé selon les revendications 1 à 3, selon lequel l'élément de dérivation (24) est une soupape de dérivation.
